# EUROPÄISCHE PATENTSCHRIFT

(11) **EP 3 437 912 B1**
(45) Veröffentlichungstag und Bekanntmachung des Hinweises auf die Patenterteilung: **28.04.2021**
(21) Anmeldenummer: 17184511.8
(22) Anmeldetag: 02.08.2017
(51) Int. Cl.: B60K 15/05, E05B 83/34

(54) **FAHRZEUGKLAPPENMODUL**
VEHICLE FLAP MODULE
MODULE OUVRANT DE VÉHICULE

(43) Veröffentlichungstag der Anmeldung: 06.02.2019
(73) Patentinhaber: MAGNA STEYR Fahrzeugtechnik AG & Co KG, 8041 Graz (AT)
(72) Erfinder: DONGMO-NAWO, Serge-Eric, 82396 Pähl (DE); REITER, Jürgen, 8200 Gleisdorf (AT)
(74) Vertreter: Zangger, Bernd

(56) Entgegenhaltungen:
- EP-A1- 0 789 122
- WO-A2-2013/050478
- DE-A1-102014 115 907

## Beschreibung

### Gebiet der Erfindung

Die vorliegende Erfindung betrifft ein Fahrzeugklappenmodul, umfassend eine Fahrzeugklappe und einen Abdecktopf, wobei die Fahrzeugklappe schwenkbar mit dem Abdecktopf verbunden ist, so dass die Fahrzeugklappe relativ zum Abdecktopf aufgeklappt und zugeklappt werden kann.

### Stand der Technik

Derartige Fahrzeugklappenmodule werden in Kraftfahrzeugen verbaut, um bei geöffneter Fahrzeugklappe einen Zugang zu einem abdeckbaren Bereich des Fahrzeuges freizugeben und bei geschlossener Fahrzeugklappe diesen Bereich abzudecken.

Das Gegenstück zur beweglichen Fahrzeugklappe bildet ein sogenannter Abdecktopf, der im Wesentlichen fest mit dem Fahrzeug verwunden ist, so dass die Fahrzeugklappe beim Auf- und Zuklappen gegenüber dem Abdecktopf beweglich, insbesondere verschwenkbar ist.

Eine derartige Fahrzeugklappe wird insbesondere durch eine Tankklappe gebildet, so dass bei geöffneter Fahrzeugklappe bzw. Tankklappe der Zugang zu einem Einfüllstutzen eines Tanks, insbesondere Kraftstofftanks, des Kraftfahrzeuges freigegeben und somit eine Betankung des Kraftfahrzeuges ermöglicht wird und bei geschlossener Fahrzeugklappe der Zugang zum Einfüllstutzen verdeckt wird.

Die Fahrzeugklappe kann auch andere Abdeckungen betreffen, und beispielsweise eine Ladeklappe für einen Elektrospeicher, insbesondere eines Elektro- oder Hybridfahrzeuges, bilden

Fahrzeugklappenmodule sind z.B. aus der DE 10 2014 115 907 A1, der WO 2013/050478 A2 oder der EP 0 789 122 A1 bekannt.

Eine solche Fahrzeugklappe soll im zugeklappten Zustand möglichst bündig, also in Flucht mit den umgebenden Seitenflächen des Kraftfahrzeuges stehen, so dass der optische Eindruck des Kraftfahrzeuges im Bereich des Einfüllstutzens wesentlich verbessert wird, ebenso wie die Aerodynamik, also die Reduzierung des Luftwiderstandes in diesem Bereich.

Bei der Herstellung von Kraftfahrzeugen kommt es beim Verbau von Fahrzeugklappenmodulen im Zuge der Fahrzeugmontage manchmal dazu, dass auf Grund von Fertigungstoleranzen des Fahrzeugklappenmoduls oder der umgebenden Kraftfahrzeugbauteile, insbesondere Seitenwände, ein Versatz zwischen Fahrzeugklappe und umgebenden Kraftfahrzeugbauteilen, insbesondere Seitenwänden, auftritt, so dass die Fahrzeugklappe im zugeklappten Zustand nicht bündig, also nicht in Flucht mit den umgebenden Seitenflächen zu liegen kommt. In diesem Fall sind üblicherweise kostenintensive, aufwändige Nacharbeiten oder Ersatz von Bauteilen erforderlich.

### Zusammenfassung der Erfindung

Es ist eine Aufgabe der Erfindung, ein Fahrzeugklappenmodul anzugeben, das derartige Probleme in der Fahrzeugmontage reduzieren kann, so dass eine kostengünstige Fahrzeugproduktion ermöglicht wird und dabei insbesondere ein Versatz zwischen Fahrzeugklappe und umgebenden Kraftfahrzeugbauteilen vermieden wird.

Die Lösung der Aufgabe erfolgt durch ein Fahrzeugklappenmodul mit den Merkmalen des Anspruchs 1.

Erfindungsgemäß wird ein Fahrzeugklappenmodul mit einer Fahrzeugklappe verwendet, die zu einem Abdecktopf verschwenkbar ist. Ein Abdecktopf bildet üblicherweise das Gegenstück zur beweglichen Fahrzeugklappe, das, beispielsweise im Bereich eines Tank-Einfüllstutzens, unbeweglich am Kraftfahrzeug befestigt ist. Die Fahrzeugklappe ist bevorzugt mittels eines Scharniers relativ zum Abdecktopf verschwenkbar.

Beim Zuklappen der Fahrzeugklappe dringt üblicherweise ein an der Fahrzeugklappe befestigter Stößel in eine "Steller" genannte Aufnahme für den Stößel ein. Der Stößel ist üblicherweise entfernt von der Schwenkachse der Fahrzeugklappe angeordnet, so dass das freie Ende der Fahrzeugklappe über den Stößel im Steller gehalten werden kann. Der Stößel kann bei zugeklappter Fahrzeugklappe im Steller auch verrasten, so dass eine Endlage der Fahrzeugklappe im zugeklappten Zustand über den verrasteten Stößel definiert ist.

Erfindungsgemäß ist die Länge des Stößels, die über die Fahrzeugklappe absteht, einstellbar, so dass noch im Zuge der Montage des Fahrzeugklappenmoduls die Lage des freien Endes des Stößels oder eines Halte- oder Verrastungsmechanismus am Stößel und somit die Lage der Fahrzeugklappe relativ zum Abdecktopf und somit relativ zum umgebenden Fahrzeug verändert werden kann.

Insbesondere kann der Stößel hierzu verschiebbar sein gegenüber der Fahrzeugklappe.

Der Stößel kann etwa normal auf die Fahrzeugklappe stehen, also im rechten Winkel zur Hauptfläche der Fahrzeugklappe.

Hierdurch kann auf kostengünstige Weise erreicht werden, dass zwischen Fahrzeugklappe und umgebenden Fahrzeugteilen, insbesondere Seitenteilen, kein Versatz auftritt.

Weiterbildungen der Erfindung sind in den abhängigen Ansprüchen, der Beschreibung sowie den beigefügten Zeichnungen angegeben.

Erfindungsgemäß weist der Stößel ein Gewinde zur Befestigung an der Fahrzeugklappe auf, so dass durch Verdrehung des Stößels am Gewinde die über die Fahrzeugklappe abstehende Länge des Stößels einstellbar ist. Durch Drehung des Stößels am Gewinde kann insbesondere eine Verschiebung des Stößels relativ zur Fahrzeugklappe, bei an sich gleich bleibender Länge des Stößels, erreicht werden.

Die Befestigung des Stößels an der Fahrzeugklappe kann vorzugsweise an einem nicht zur Hauptfläche der Fahrzeugklappe gehörenden, aber mit dieser Hauptfläche fest verbundenen Befestigungsteil, wie einem Scharnierarm der Fahrzeugklappe erfolgen.

Bevorzugt verrastet der Stößel bei zugeklappter Fahrzeugklappe im Steller.

Gemäß der Erfindung weist der Stößel als Gewinde ein Innengewinde auf, wobei das Innengewinde über eine Schraube an der Fahrzeugklappe befestigt ist und wobei zwischen der Fahrzeugklappe und dem Innengewinde des Stößels eine Fixiermutter an der Schraube angeordnet ist.

### Kurzsbeschreibung der Zeichnungen

Die Erfindung wird im Folgenden beispielhaft unter Bezugnahme auf die Zeichnungen beschrieben.
- Fig. 1: ist eine Teildarstellung einer Ausführungsform eines erfindungsgemäßen Fahrzeugklappenmoduls.
- Fig. 2: ist eine Teildarstellung eines nicht zur Erfindung gehörenden Fahrzeugklappenmoduls.
- Fig. 3: ist eine Teildarstellung eines weiteren, nicht zur Erfindung gehörenden Fahrzeugklappenmoduls.

### Detaillierte Beschreibung der Erfindung

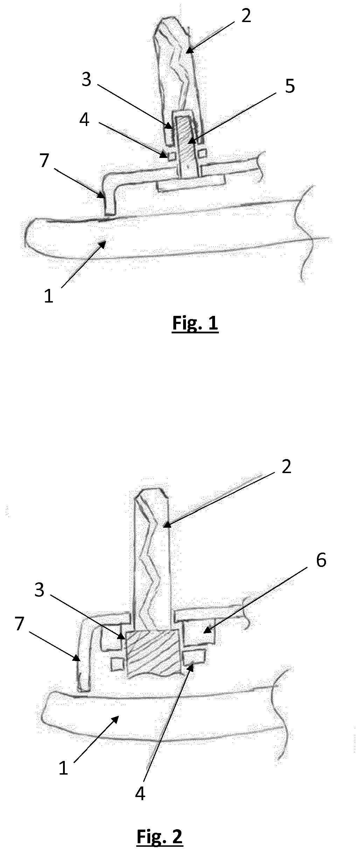

In Fig. 1 ist ein erfindungsgemäßes Fahrzeugklappenmodul, insbesondere Tankklappenmodul, dargestellt, welches eine Fahrzeugklappe 1 umfasst, die über ein Scharnier schwenkbar mit einem (nicht dargestellten) Abdecktopf verbunden ist, so dass die Fahrzeugklappe 1 relativ zum Abdecktopf und somit im verbauten Zustand relativ zu einem Kraftfahrzeug aufgeklappt und zugeklappt werden kann.

Die Fahrzeugklappe 1 weist einen Stößel 2 auf, der ungefähr normal auf die Hauptfläche der Fahrzeugklappe 1 steht, deren Außenseite die sichtbare Oberfläche der Fahrzeugklappe 1 bildet. Am Abdecktopf ist ein Steller als Aufnahmeelement für den Stößel 2 ausgebildet.

Der Stößel 2 weist ein Gewinde 3 an seinem der Fahrzeugklappe 1 zugewandten Ende auf, dass als Innengewinde ausgebildet ist. Das Innengewinde ist mittels einer Schraube 5 an der Fahrzeugklappe 1 befestigt, nämlich an einem Scharnierarm 7, der ein mit der Hauptfläche der Fahrzeugklappe 1 fest verbundenes Bauteil bildet. Die Schraube 5 weist einen Schraubenkopf auf, der von der, im eingebauten Zustand die Außenseite bildenden Seite der Fahrzeugklappe 1 her, am Scharnierarm 7 anliegt. Das freie Ende der Schraube 5 ist in das Innengewinde des Stößels 2 eingeschraubt.

Zwischen der Fahrzeugklappe 1, genauer dem Scharnierarm 7 der Fahrzeugklappe 1 und dem Innengewinde des Stößels 2 ist eine Fixiermutter 4 an der Schraube 5 angeordnet und drückt zur Fixierung der Verbindung gegen den Stößel 2. Zur Fixierung der Schraube 5 an der Fahrzeugklappe 1 bzw. am Scharnierarm 7 kann beispielsweise eine weitere Fixiermutter vorgesehen sein oder die Schraube 5 in anderer Weise mit der Fahrzeugklappe bzw. dem Scharnierarm fest verbunden sein.

Durch Verdrehen des Stößels 2 gegenüber der Schraube 5 wird der Stößel 2 relativ zum Scharnierarm 7 und somit zur Hauptfläche der Fahrzeugklappe 1 verschoben und ist somit die über die Fahrzeugklappe 1 abstehende Länge des Stößels 2 veränderbar, also einstellbar.

Die nicht zur Erfindung gehörende Ausführungsform der Fig. 2 unterscheidet sich dadurch, dass hier der Stößel 2 als Gewinde 3 ein Außengewinde aufweist und dieses Außengewinde an einem Innengewinde der Tankklappe 1 bzw. an einem Innengewinde einer mit der Fahrzeugklappe 1 drehfesten Einstellmutter 6 verschraubt ist.

Am Außengewinde des Stößels 2 ist zudem eine Fixiermutter 4 angeordnet, die von außen gegen die Einstellmutter 6 drückt und den Stößel 2 in seiner Position gegenüber der Einstellmutter 6 fixiert.

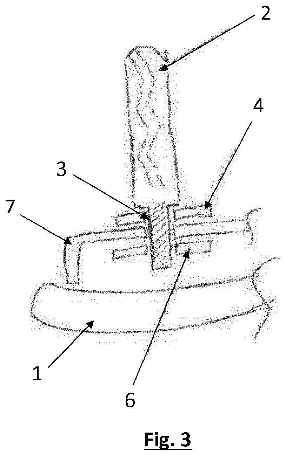

In der weiteren, nicht zur Erfindung gehörenden Ausführungsform der Fig. 3 weist der Stößel 2 als Gewinde 3 ebenfalls ein Außengewinde auf, wobei das Außengewinde hier einen geringeren Durchmesser hat, als der übrige Stößel 2.

Das Außengewinde ist zweiseitig mittels Muttern 4 und 6 an der Fahrzeugklappe 1, bzw. genauer an einem mit der Fahrzeugklappe 1 fest verbundenem Bauteil nämlich dem Scharnierarm 7, befestigt, nämlich einerseits von außen - also von Seiten der auch im zugeklappten Zustand sichtbaren Fahrzeugklappenoberfläche - mit einer Einstellmutter 6 und von der gegenüberliegenden Seite mit einer Fixiermutter 4.

Je nach Position des Gewindes 3 des Stößels 2 in den jeweiligen Gegengewinden ergibt sich eine andere Lage des Stößels 2 und somit eine andere Lage der Fahrzeugklappe 1 in Bezug auf den zugehörigen Abdecktopf bzw. auf die umgebenden Bauteile eines Fahrzeugs, dass mit einem erfindungsgemäßen Fahrzeugklappenmodul ausgestattet ist.

### Bezugszeichenliste

- 1: Fahrzeugklappe
- 2: Stößel
- 3: Gewinde
- 4: Fixiermutter
- 5: Schraube
- 6: Einstellmutter
- 7: Scharnierarm

## Patentansprüche

1. Fahrzeugklappenmodul, umfassend eine Fahrzeugklappe (1) und einen Abdecktopf, wobei die Fahrzeugklappe (1) schwenkbar mit dem Abdecktopf verbunden ist, so dass die Fahrzeugklappe (1) relativ zum Abdecktopf aufgeklappt und zugeklappt werden kann, wobei die Fahrzeugklappe (1) einen Stößel (2) aufweist und der Abdecktopf einen Steller aufweist zur Aufnahme des Stößels (2), so dass der Stößel (2) bei zugeklappter Fahrzeugklappe (1) in den Steller aufgenommen ist,
**dadurch gekennzeichnet, dass** die über die Fahrzeugklappe (1) abstehende Länge des Stößels (2) einstellbar ist, wobei der Stößel (2) ein Gewinde (3) zur Befestigung an der Fahrzeugklappe (1) aufweist, so dass durch Verdrehung des Stößels (2) am Gewinde (3) die über die Fahrzeugklappe (1) abstehende Länge des Stößels (2) einstellbar ist, wobei der Stößel (2) als Gewinde (3) ein Innengewinde aufweist, wobei das Innengewinde über eine Schraube (5) an der Fahrzeugklappe (1) befestigt ist, wobei zwischen der Fahrzeugklappe (1) und dem Innengewinde des Stößels (2) eine Fixiermutter (4) an der Schraube (5) angeordnet ist.

2. Fahrzeugklappenmodul nach Anspruch 1,
**dadurch gekennzeichnet, dass** der Stößel (2) bei zugeklappter Fahrzeugklappe (1) im Steller verrastet.

3. Fahrzeugklappenmodul nach zumindest einem der vorhergehenden Ansprüche,
**dadurch gekennzeichnet, dass** zur Einstellung des Stößels (2) und zur Fixierung des Stößels (2) in einer eingestellten über die Fahrzeugklappe (1) abstehenden Länge eine Einstellmutter (6) und die Fixiermutter (4) vorgesehen sind.

## Claims

1. Vehicle flap module comprising a vehicle flap (1) and a protection cover, wherein the vehicle flap (1) is pivotably connected to the protection cover such that the vehicle flap (1) can be folded open and folded shut relative to the protection cover, wherein the vehicle flap (1) has a pusher (2) and the protection cover has an actuator for receiving the pusher (2) such that the pusher (2) is received in the actuator when the vehicle flap (1) is folded shut,
**characterized in that**
the length of the pusher (2) that projects beyond the vehicle flap (1) is adjustable, wherein the pusher (2) has a thread (3) for fastening to the vehicle flap (1) such that the length of the pusher (2) that projects beyond the vehicle flap (1) is adjustable by rotating the pusher (2) on the thread (3), wherein the pusher (2) has an internal thread as the thread (3), wherein the internal thread is fastened to the vehicle flap (1) by way of a screw (5), wherein a locking nut (4) is disposed on the screw (5) so as to be between the vehicle flap (1) and the internal thread of the pusher (2).

2. Vehicle flap module according to Claim 1,
**characterized in that** the pusher (2) latches in the actuator when the vehicle flap (1) is folded shut.

3. Vehicle flap module according to at least one of the preceding claims,
**characterized in that** an adjusting nut (6) and the locking nut (4) are provided for adjusting the pusher (2) and for locking the pusher (2) at a length which is adjusted so as to project beyond the vehicle flap (1).

## Revendications

1. Module ouvrant de véhicule, comprenant un ouvrant de véhicule (1) et une calotte de recouvrement, l'ouvrant de véhicule (1) étant connecté de manière pivotante à la calotte de recouvrement, de telle sorte que l'ouvrant de véhicule (1) puisse être ouvert et fermé par pivotement par rapport à la calotte de recouvrement, l'ouvrant de véhicule
(1) présentant une tige (2) et la calotte de recouvrement présentant un actionneur pour recevoir la tige (2) de telle sorte que la tige
(2) soit reçue dans l'actionneur lorsque l'ouvrant de véhicule (1) est fermé par pivotement,
**caractérisé en ce que** la longueur de la tige (2) dépassant au-delà de l'ouvrant de véhicule (1) peut être ajustée, la tige (2) présentant un filetage (3) pour la fixation à l'ouvrant de véhicule (1) de telle sorte que par rotation de la tige (2) au niveau du filetage (3), la longueur de la tige (2) dépassant au-delà de l'ouvrant de véhicule (1) puisse être ajustée, la tige (2) présentant en tant que filetage (3) un filetage intérieur, le filetage intérieur étant fixé à l'ouvrant de véhicule (1) par le biais d'une vis (5), un écrou de fixation (4) étant disposé sur la vis (5) entre l'ouvrant de véhicule (1) et le filetage intérieur de la tige (2).

2. Module ouvrant de véhicule selon la revendication 1,
**caractérisé en ce que** la tige (2) s'encliquète dans l'actionneur lorsque l'ouvrant de véhicule (1) est fermé par pivotement.

3. Module ouvrant de véhicule selon au moins l'une des revendications précédentes,
**caractérisé en ce que** pour l'ajustement de la tige (2) et pour la fixation de la tige (2) à une longueur ajustée dépassant au-delà de l'ouvrant de véhicule (1), un écrou d'ajustement (6) et l'écrou de fixation (4) sont prévus.
